(19) Europäisches Patentamt
European Patent Office
Office européen des brevets

(11) **EP 1 016 074 B1**

(12) **EUROPEAN PATENT SPECIFICATION**

(45) Date of publication and mention
of the grant of the patent:
**16.03.2005 Bulletin 2005/11**

(51) Int Cl.⁷: **G10L 15/26**, G06F 17/27

(21) Application number: **98915327.5**

(86) International application number:
**PCT/US1998/006852**

(22) Date of filing: **03.04.1998**

(87) International publication number:
**WO 1998/044484 (08.10.1998 Gazette 1998/40)**

(54) **TEXT NORMALIZATION USING A CONTEXT-FREE GRAMMAR**

TEXTNORMALISIEREN DURCH EINE KONTEXTFREIE GRAMMATIK

NORMALISATION DE TEXTES UTILISANT UNE GRAMMAIRE INDEPENDANTE DU CONTEXTE

(84) Designated Contracting States:
**DE FR GB**

(30) Priority: **03.04.1997 US 840117**

(43) Date of publication of application:
**05.07.2000 Bulletin 2000/27**

(73) Proprietor: **MICROSOFT CORPORATION**
**Redmond, Washington 98052-6399 (US)**

(72) Inventors:
• **ALLEVA, Fileno, A.**
**Redmond, WA 98052 (US)**
• **ROZAK, Michael, J.**
**Issaquah, WA 98027 (US)**
• **ISRAEL, Larry, J.**
**Bellevue, WA 98006 (US)**

(74) Representative: **VOSSIUS & PARTNER**
**Postfach 86 07 67**
**81634 München (DE)**

(56) References cited:
**US-A- 5 349 526          US-A- 5 615 378**

• **"HANDLING NAMES AND NUMERICAL EXPRESSIONS IN AN N-GRAM LANGUAGE MODEL" IBM TECHNICAL DISCLOSURE BULLETIN, vol. 37, no. 10, October 1994, page 297/298 XP000475672**

## Description

### TECHNICAL FIELD

The present invention relates generally to data processing systems, and more particularly, to text normalization using a context-free grammar.

BACKGROUND OF THE INVENTION

Speech recognizers have gained popularity in recent years. A speech recognizer typically includes software that is run on a computer system to recognize spoken words or phrases. The speech recognizer generally outputs text corresponding to its interpretation of the spoken input. For example, if a speaker speaks the word "dog," the speech recognizer recognizes the spoken word and outputs the text "dog."

Unfortunately, speech recognizers often produced textual output that is awkward or not familiar to recipients. For example, if a speaker speaks the phrase "one hundred forty seven," the speech recognizer outputs "one hundred forty seven" rather than the sequence of digits "147." Similar awkward textual outputs are produced by speech recognizers for inputs that specify dates, times, monetary amounts, telephone numbers, addresses, and acronyms. As a result, the recipient of the textual output is forced to manually edit the text to put it in a more acceptable form. As speech recognizers are being incorporated in document creation software, the inability of the speech recognizers to produce acceptable textual output substantially diminishes the usefulness of such software.

US-A-5 349 526 discloses a system and a method for converting inoperative sentence elements into operative elements in which a set of grammar rules for substituting sentence elements with different elements is established. A sequential comparison between each grammar rule and the sentence elements is then accomplished to find a match between a grammar rule and one or more contiguous sentence elements. A substitution of the matched element for the different elements from the grammar rule is then accomplished. Such a sequential comparison and substitution is continued for the entire series of sentence elements to fully convert the sentence to operative elements.

IBM Technical Disclosure Bulletin, volume 27, No. 10, October 1994 titled "Handling Names and Numerical Expressions in a n-Gram Language Model" discloses a method of improving n-Gram model estimates of the probability that a word will follow (not necessarily immediately) a name or numerical expression.

### SUMMARY OF THE INVENTION

The present invention as claimed overcomes the limitation of prior art speech recognizers by providing a facility for normalizing text. The normalization of text produces output text that is more acceptable to recipients. The normalization may also include the substitution of textual content with non-textual content, such as audio content, video content, or even a hypertext document

In accordance with a first aspect of the present invention, a method is practiced in a computer system that has a speech recognition engine for recognizing content in an input speech. Text corresponding to speech input is received from the speech recognition engine by the computer system. A context-free grammar is applied to identify substitute content for the received text. The received text is substituted with the substitute content.

In accordance with another aspect of the present invention, a file is provided in a computer system to set forth rules of a context-free grammar for normalizing text. Text is received from a speech recognizer that recognizes portions of speech in speech input. The text corresponds to speech input. At least a portion of the text is normalized to replace the portion with a normalized alphanumeric string ("alphanumeric" as used in this context is intended to include ASCII and Unicode). The normalizing comprises applying a rule from the context-free grammar to replace the portion of the text being normalized with the normalized alphanumeric string.

In accordance with an additional aspect of the present invention, an application program interface (API) that includes a text normalizer is provided within a computer system. The computer runs an application program and includes a speech recognizer for recognizing portions of speech in speech input and for outputting text that corresponds to the recognized portions of speech. Text is received from the speech recognizer at the text normalizer. The text is normalized by the text normalizer by applying a rule from the context-free grammar to alter contents of the text and produce normalized text. The normalized text is passed to the application program.

In accordance with a further aspect of the present invention, a computer system includes a speech recognizer for recognizing portions of speech in speech input and for producing textual output corresponding to the recognized portions of speech. The computer system also includes a context-free grammar that contains rules for normalizing text and a text normalizer that applies at least one rule from the context-free grammar to normalize textual output from the speech recognizer.

BRIEF DESCRIPTION OF THE DRAWINGS

A preferred embodiment of the present invention will be described below relative to the following figures.

Figure 1 is a block diagram illustrating a computer system that is suitable for practicing the preferred embodiment of the present invention.

Figure 2 is a block diagram illustrating a distributed system that is suitable for practicing the preferred embodiment of the present invention.

Figures 3A-3E illustrate the data flow between the speech recognizer, the text normalizer, and the application programs for different types of normalization.

Figure 4 illustrates the logical format of the text file that holds the context-free grammar.

Figure 5 depicts the categories of other rules that are set forth within the text file of Figure 4.

Figure 6 is a flow chart illustrating the steps that are performed to use the text file for normalizing text.

Figure 7 depicts an example portion of the tree for the context-free grammar.

Figure 8 is a flow chart illustrating the steps that are performed to determine when to apply a rule from the context-free grammar.

Figure 9 depicts an example of normalization of a portion of text.

Figure 10 is a flow chart illustrating the steps that are performed for an application program to receive normalized text.

Figure 11 is a flow chart illustrating the steps that are performed to replace one context-free grammar with another.

Figure 12 is a flow chart illustrating the steps that are performed to edit a context-free grammar.

DETAILED DESCRIPTION OF THE INVENTION

The preferred embodiment of the present invention provides a mechanism for normalizing text that is received from a speech recognizer. A context-free grammar is applied to perform the text normalization. The context-free grammar includes a number of rules that specify how the text is to be normalized. These rules are applied to textual output received from the speech recognizer to produce normalized text. In the preferred embodiment of the present invention, the text normalization is performed within an application program interface (API) that may be called by application programs to receive text corresponding to speech input.

The preferred embodiment of the present invention may provide multiple types of text normalization. For example, text may be normalized to produce normalized text. Similarly, text may be normalized to produce different types of media content. Text may be normalized to produce audio content and video content. Text may even be normalized to produce hypertext documents that are substituted for the text.

The context-free grammar utilized in the preferred embodiment of the present invention is extensible. The context-free grammar, as will be described in more detail below, is specified within a text file. This text file may be replaced with a substitute text file that specifies a different context-free grammar. Moreover; the text file may be edited so as to alter the contents of the context-free grammar. As the context-free grammar is specified within a text file, the context-free grammar is human-readable.

Figure I depicts a computer system 10 that is suitable for practicing the preferred embodiment of the present invention. The computer system 10 includes a central processing unit (CPU) 12 that oversees operations of the computer system. The CPU 12 may be realized by any of a number of different types of microprocessors. The computer system may also include a number of peripheral devices, including a keyboard 14, a mouse 16, a microphone 18, a video display 20, and a loud speaker 22. The microphone 18 may be used to receive speech input from a speaker, and a loud speaker 22 may be used to output audio content, such as speech. The computer system 10 may also include a network adapter 24 for interfacing the computer system with a network, such as a local area network (LAN) or wide area network (WAN). Those skilled in the art will appreciate that a number of different types of network adapters may be utilized in practicing the present invention. The computer system 10 may also include a modem for enabling the computer system to communicate with a remote computing resources over an analog telephone line.

The computer system 10 additionally includes a primary memory 28 and a secondary memory 30. The primary memory may be realized as random access memory (RAM) or other types of internal memory storage known to those skilled in the art. The secondary storage 30 may take the form of a hard disk drive, CD-ROM drive, or other type of secondary storage device. In general, the secondary memory 30 may be realized as a secondary storage device that stores computer-readable removable storage media, such as CD-ROMs.

The primary memory 28 may hold software or other code that constitute a speech recognizer 32. The speech recognizer may take the form of a speech recognition engine and may include ancillary facilities such as a dictionary and alike. A suitable speech recognition engine is described in co-pending application, entitled "Method And System For Speech Recognition Using Continuous Density Hidden Markov Models," Application No. 08/655,273, which was filed on May 1, 1996.

Those skilled in the art will appreciate that portions of the speech recognizer 32 may also be stored on the secondary memory 30. The primary memory 28 holds a speech application program interface (API) 34 that works with the speech recognizer 32 to produce textual output corresponding to recognized speech within speech input. Application programs 36 may call the speech API 34 to receive the textual output that corresponds to the recognized portions of the speech input. These application programs 36 may include dictation applications, word processing programs, spreadsheet programs and the like. The speech API 34 may include a text normalizer 38 for performing text normalization.

The text normalizer 38 is the resource that is responsible for normalizing the text that is received by the speech API 34 from the speech recognizer 32. The types of normalization that are performed by the text normalizer 38 will be described in more detail below.

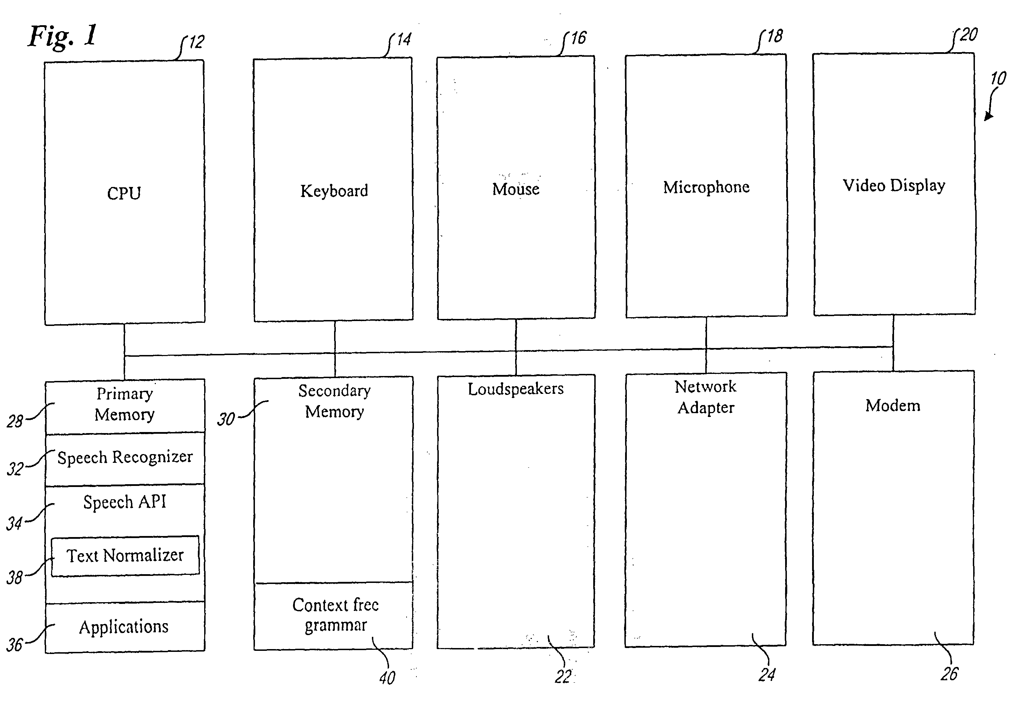

Those skilled in the art will appreciate that the text normalizer 38 need not be part of the speech API 34 but rather may exist as a separate entity or may be incorporated into the speech recognizer 32. The speech recognizer uses a context-free grammar 40 that is shown in Figure 1 as being stored in secondary storage 30. Those skilled in the art will appreciate that the context-free grammar 40 may also be stored in primary memory 28.

It should be appreciated that the computer system configuration depicted in Figure 1 is intended to be merely illustrative and not limiting of the present invention. The present invention may be practiced with other computer system configurations. These other configurations may include fewer components than those depicted in Figure 1 or may include additional components that differ from those depicted in Figure 1. Moreover, the present invention need not be practiced on a single processor computer but rather may be practiced in multiprocessor environments, including multiprocessors and distributed systems.

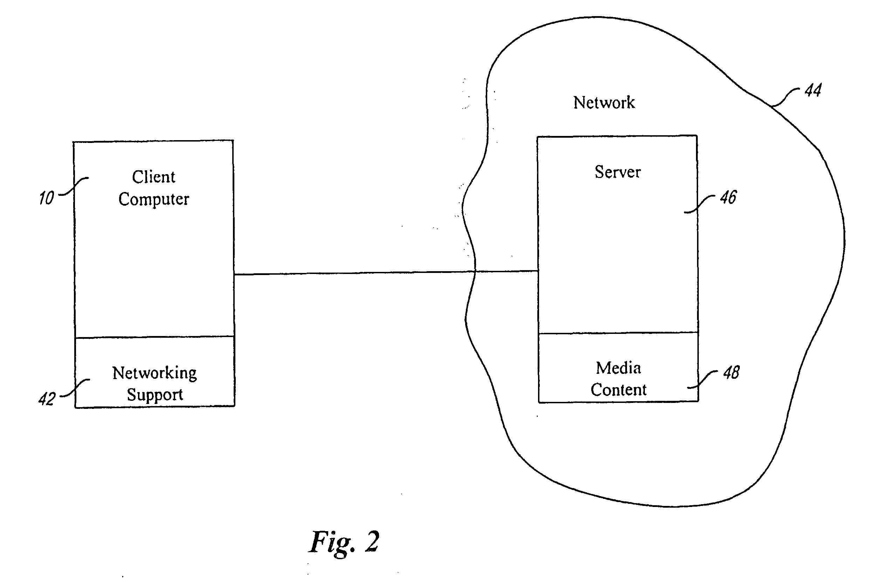

Figure 2 depicts an instance where the computer system 10 is a client computer that has access to a network 44. This network 44 may be a LAN or a WAN. The network 44 may be the Internet, an Intranet or an Extranet. The client computer 10 includes networking support 42. This networking support 42 may include client code for a network operating system, a conventional operating system or even a web browser. The networking support 42 enables the client computer 10 to communicate with the server 46 within the network 44. The server 46 may hold media content 48, such as audio data, video data, textual data, or a hypertext document that is to be used by the client computer 10 in normalizing text.

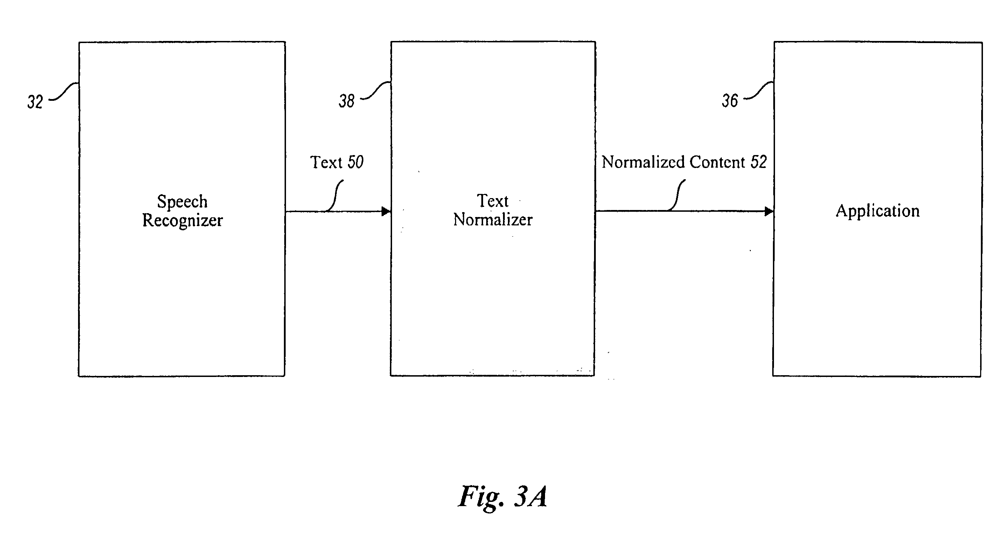

As was mentioned above, the text normalizer 38 normalizes the text received from the speech recognizer 32 to produce normalized content. Figure 3A depicts the flow of data between the speech recognizer 32, the text normalizer 38, and an application program 36. In general, the speech recognizer 32 outputs text 50 that corresponds to recognized portions of speech within speech input received via the microphone 18 or stored in secondary storage 30. The text 50 may output a word at a time to the text normalizer 38. Nevertheless, those skilled in the art will appreciate that the granularity of textual output produced by the speech recognizer 32 may vary and may include letters or even phrases. The text normalizer 38 produces normalized content 52 that it passes on to an application program 36.

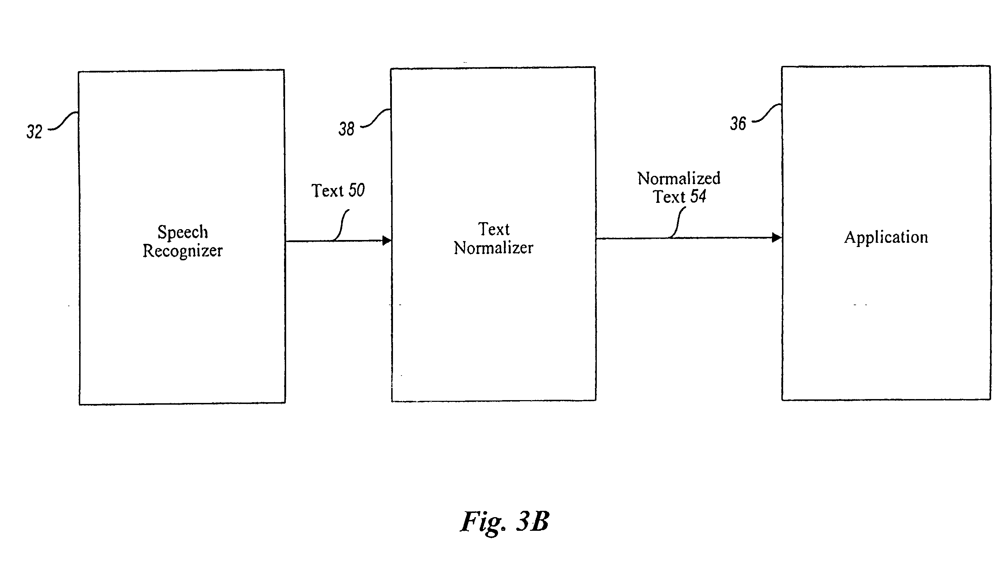

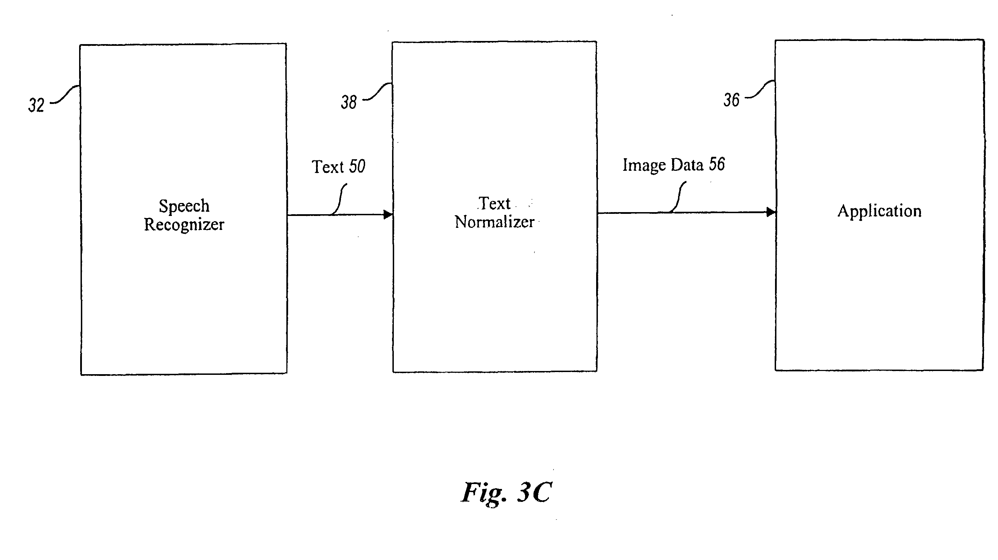

Figure 3B shows an instance where the text normalizer 38 produces normalized text 54 that it passes to the application program 36. The normalized text 54 includes substitute text that replaces the text 50 that was output by the recognizer 32. However, as shown in Figure 3C, the text normalizer 38 may, alternatively, normalize the text to produce image data 56, such as a bitmap, metafile, or other representation of an image to the application program 36. The text 50 may specify an identifier of the representation of the image. In this instance, the text normalizer 38 replaces the identifier with the actual representation of the image that is identified by the identifier.

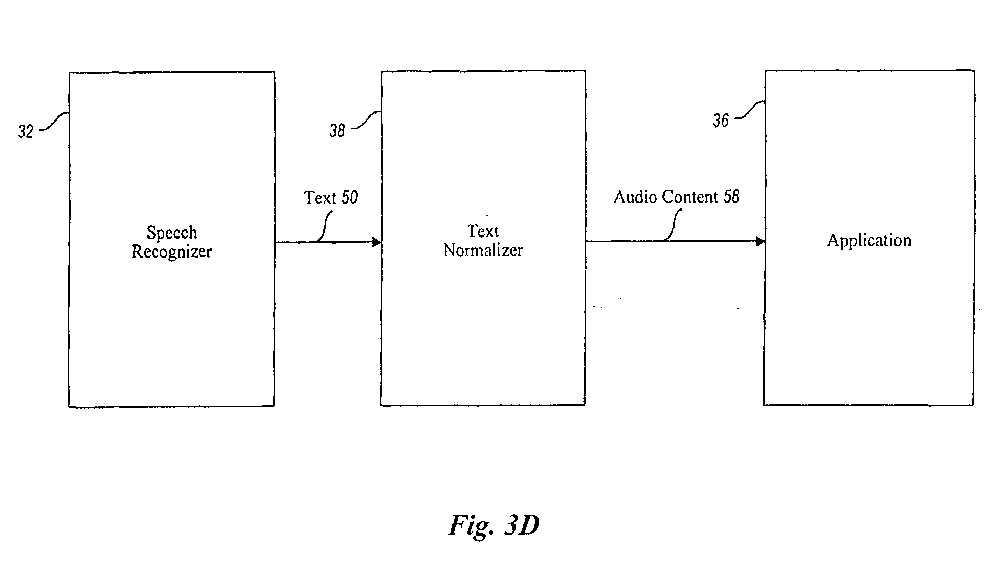

Figure 3D shows an instance wherein the text normalizer 38 receives text 50 from the speech recognizer 32 and produces audio content 58 as the normalized. content. In this case, the text 50 may identify an audio clip or a file that holds audio data. This identifier is replaced with the associated audio clip for a file when normalized. Alternatively, the text may be a word or phrase for which the text normalizer 38 has an audio representation and wishes to substitute the audio representation for the word or phrase.

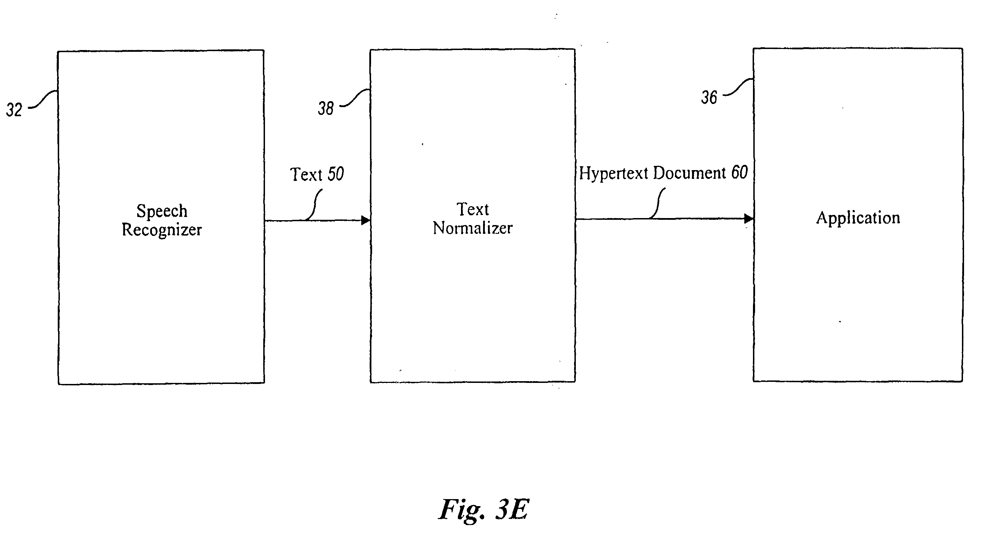

Figure 3E depicts an instance wherein the text normalizer 38 receives text 50 from the speech recognizer 32 and outputs a hypertext document 60 to the application program 36. The text 50 may include an identifier, such as a uniform resource location (URL) that is associated with the hypertext document 60. When the text normalizer 38 receives the text 50 for normalization, it replaces the text with the associated hypertext document 60.

It should be appreciated that the text normalizer may combine different types of media content in the resulting normalized content 52 that is passed to the application programs. It should also be appreciated that the text normalizer 38 may draw upon media content or resources within a network 44 to realize the normalization. For purposes of simplicity and clarity, the discussion below will focus on instances like that depicted in Figure 3B wherein text 50 is normalized by the text normalizer 38 to produce normalized text 54.

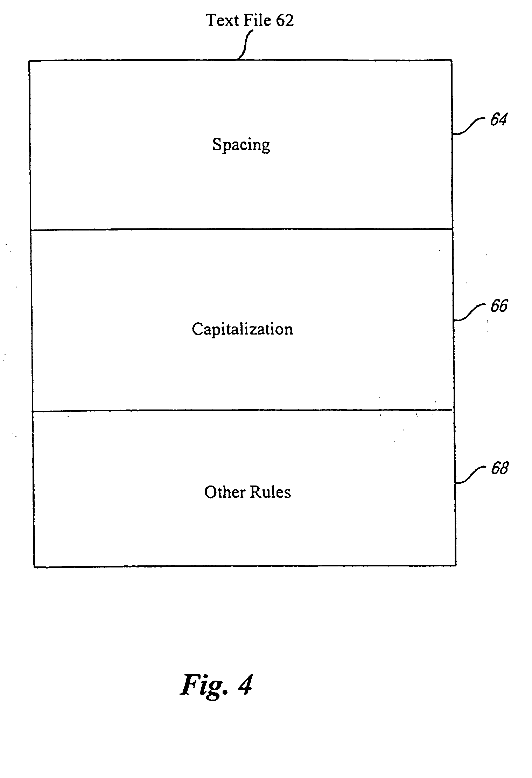

As was mentioned above, the context-free grammar 40 is stored as a text file. The text file holds specification of the rules of the context-free grammar. Figure 4 depicts a logical organization of the text file 62. The text file 62 is divided into three major sections 64, 66, and 68. Each of the sections is delineated by a header or tag within the text file 62 (e.g., "[spacing]," "[capitalization]," "[Rules]"). The first section is the spacing section 64 that specifies rules of the context-free grammar relative to spacing. These rules are implemented as a table. An example of a specification of rules within the table is as follows:

| left | right | substitution | Switch |
|------|-------|--------------|--------|
| "." | " " | "00" | {1} |
| "." | " " | "0" | {1} |

The table includes a "left" column that specifies a character that appears to the left, a "right" column that specifies a character that appears to the right, a "substitution" column that holds a proposed substitution for the right character, and a "switch" column that specifies whether the rule is in effect or not. The first rule in the above example specifies that if a period (*i.e.*, the left character) is followed by a space (*i.e.*, the right character), two spaces are to be substituted for the single space. The switch column holds a value of "I" and thus indicates that this rule is in effect. The second rule (specified underneath the first rule in the above example) indicates that a period is to be followed by only a single space. The switch column, however, holds a value of "! I," which indicates that the rule is not in effect.

It should be noted that a user interface, such as a property sheet, may be provided to enable a user to choose which of the spacing rules are in effect or not. The user choices are used to set the switch fields within the table.

The capitalization section 66 is also organized as a table like that provided for the spacing section 64. This section 66 holds capitalization rules such as the first letter of a word following a period that ends a sentence is capitalized. These rules may be also implemented as switchable so that a user may choose capitalization options.

The third section is the other rule section 68. The other rule section holds specification of a number of different rules that do not concern capitalization or spacing. This section is delineated by a "Rules" heading or tag. An example of such a rule is as follows:

```
<Digits> = [1+] <0..9>
    <0..9> = zero "0"
    <0..9> = one "1"
          .           .
          .           .
          .           .
    <0..9> = nine "9"
```

This rule indicates written digits may include one or more words containing digits and the rule specifies the substitution of digits for written digit strings (*i.e.* "1" for "one").

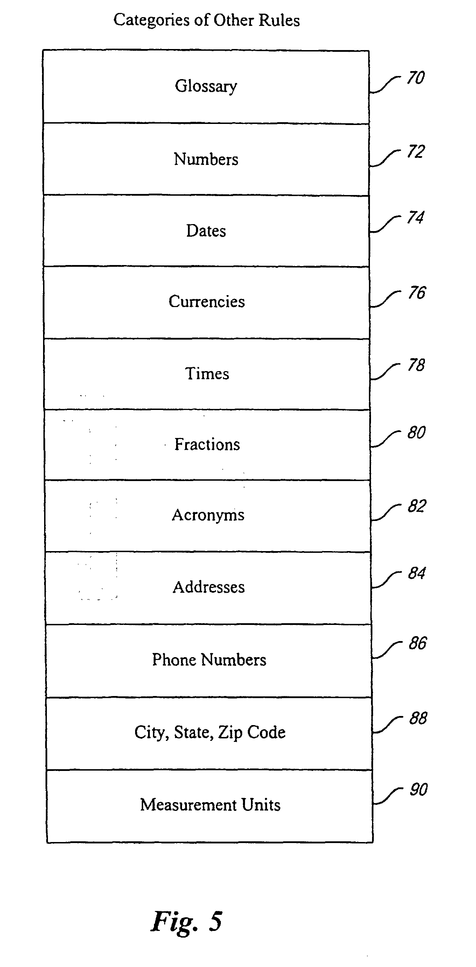

Figure 5 depicts the categories of other rules that may be implemented in accordance with the preferred embodiment of the present invention. The glossary category of rule 70 specifies the replacement of text with the substitute text. A user may type in such substitutions as part of the glossary to enable shorthand ways of adding text to a document. The numbers category 72 contains rules that specify the substitution of the written form of words (*i.e.*, a string of words) with a digital representation composed solely of digits. For example, "one hundred forty seven" is replaced by "147" by application of rules in this category 72 of rules.

A dates category 74 contains rules that concern how spoken versions of dates are to be normalized. For example, the output text "april first nineteen ninety seven" is normalized to "April 1, 1997."

The currencies category 76 holds rules that normalize the specification of monetary amounts. For example, the phrase "ten cents" may be normalized to "10¢" by rules in this category 76.

The times category 78 holds rules that are used to normalize specification of time. For instance, the text "four o'clock in the afternoon" may be normalized to "4 p.m." by rules within this category 78.

The fractions category 80 normalizes fractions into a mathematical form. Hence, the text "one-fourth" may be normalized to "1/4" by rules in this category 80.

The acronyms category 82 normalizes text that specifies acronyms. For example, the text "CIA" may be normalized to "C. I. A." by rules in this category 82.

The addresses category 84 contains rules for normalizing the specification of addresses. For instance, the string "one hundred fifty sixth" may be normalized to "156th" by rules within this category 84.

The phone numbers category 86 normalizes the specification of phone numbers. When a user speaks a phone number, the speech recognizer may interpret the phone number as merely a sequence of digits. For example, the string "nine three six three zero zero zero" may be normalized to "936-3000" by rules within this category 86.

The city, state, zip code category 88 holds rules for specifying how a sequence of city, state, and zip code should appear. For example, the text "Seattle Washington nine eight zero five two" may be normalized to "Seattle, WA 98052" by rules within this category 88.

The measurement units category 90 applies rules regarding, the specification of measurements. For instance, the text "nineteen feet" will be normalized to "19 ft." by rules within this category 90.

Those skilled in the art will appreciate that the text file 62 may have a: different format other that depicted within Figure 4. Moreover, the text file 62 may include rules for substituting text with audio content or video content. Rules may also be included for substituting text with hypertext documents. Those skilled in the art will appreciate that the context-free grammar need not be specified as a text file in practicing the present invention.

Those skilled in the art will further appreciate that additional categories of rules other than those depicted in Figure 5 may be utilized. Still further, fewer categories of rules or different categories of rules may apply other than those depicted in Figure 5.

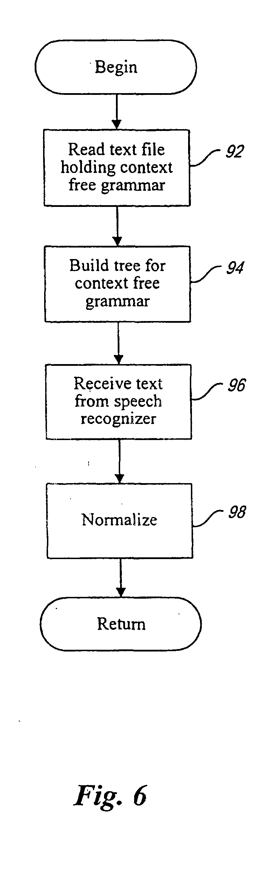

In order to utilize the context-free grammar 40, the text file 62 must be read and processed. Figure 6 is a flowchart that depicts the steps that are performed to utilize the context-free grammar in normalizing text. First, the text file 62 that holds the context-free grammar is read (step 92 in Figure 6). The content held therein are used to build a tree representation for the context-free grammar (step 94 in Figure 6). This tree representation is used in parsing the input text received from the speech recognizer 32. Each path of the tree specifies a portion of a rule for normalizing text. Thus, the text received from the speech recognizer 32 is processed by the text normalizer 38 to compare the text with the rules contained within the tree and perform the appropriate normalization. Accordingly, text is received from the speech recognizer (step 96 in Figure 6) and normalized (step 98 in Figure 6). The tree acts largely as a parsing mechanism for deciding what portions of text received from the speech recognizer 32 should be normalized and how these portions should be normalized.

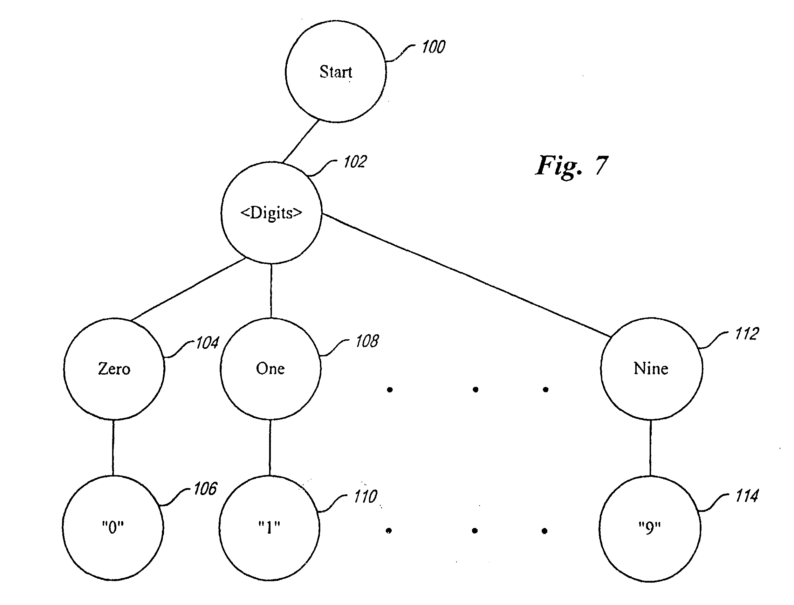

Figure 7 shows an example of a portion of the tree that is built by reading rules from the text file. The tree may be stored in binary form for optimization. This subtree specifies portions of the "Digits" rule that was set forth above as an example of rules provided within the text file 62. The tree includes a start rule node 100 followed by a digits rule node 102. Nodes 104 and 106 specify that if the received text is "zero" the text is to be normalized and replaced with "0." Similarly, nodes 108, 110, 112, and 114 indicate the substitutions of "1" for "one" and "9" for "nine," respectively.

An example is helpful in illustrating how the subtree depicted in Figure 7 may be used. Suppose that the text normalizer 38 receives the string "zero" the text normalizer starts at the start rule 100 and then determines that the string "zero" specifies a digit. It then follows the path to node 104 and determines that there is a match. The text normalizer then uses the substitute or normalized string "0" specified in node 106 to normalize the received string.

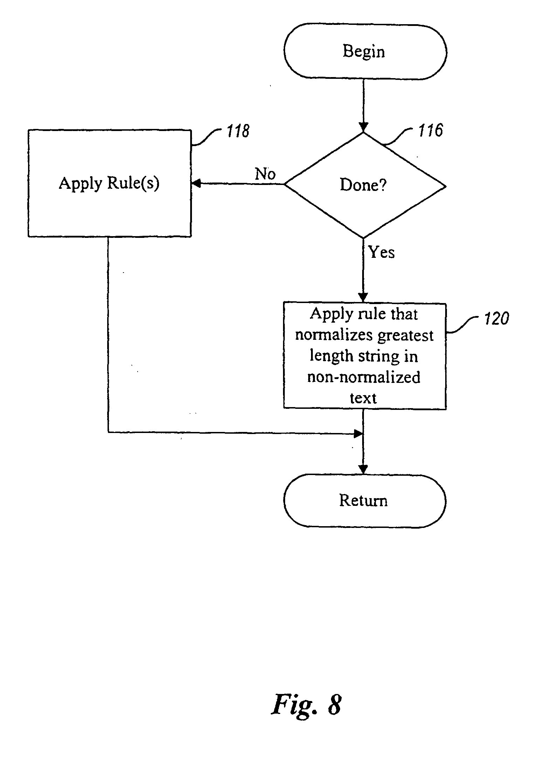

The rules are not necessarily applied on a word-by-word basis. Instead, the system seeks to apply the rule that will normalize the greatest length string within the text received from the speech recognizer 32. Figure 8 is a flowchart illustrating the steps that are performed in applying the rules. In general, a rule will be applied when at least a complete rule has been identified and no further portion of a rule can be applied. Thus, in step 116 of Figure 8, the text normalizer determines whether it is done normalizing a given portion of a text. If the text normalization is done (see step 116 in Figure 8), the text normalizer applies the rule that normalizes the greatest length of string in the non-normalized text (step 120 in Figure 8). It should be noted that there may be instances where multiple rules apply and there has to be a criteria for determining which rule to actually utilize. The preferred embodiment of the present invention utilizes the rule that normalizes the greatest portion of the non-normalized string. If, however, it is determined that there is further application of the rules to be done (see step 116 in Figure 8), then the additional portions of the rules are applied (step 118 in Figure 8).

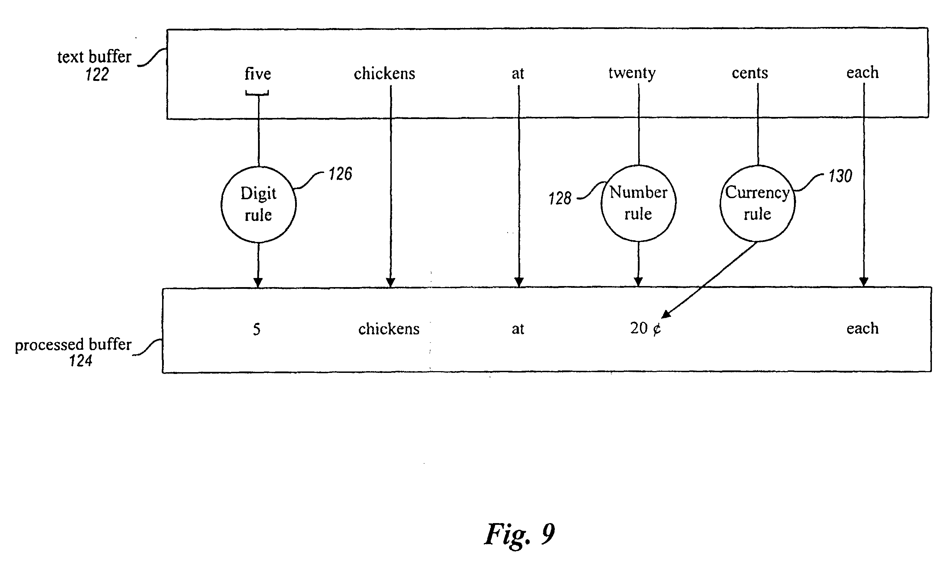

An example is helpful in illustrating when rules are applied and how normalization is performed. Figure 9 depicts an example of text string "five chickens at twenty cents each." These words are stored within a text buffer 122 that is used by the text normalizer 38. The first word, "five," is processed by the text normalizer to determine whether there are any matching rules or not. There will be a match within the digit rule 126 for this word. Before applying the rule, the text nonnalizer 38 looks at the next word "chickens" as there is no rule that applies to the phrase "five chickens", the text normalizer 38 knows that it is done (see step 116 in Figure 8) and applies the digit rule to replace "five" with "5." The value "5" is stored in a processed buffer 124 that holds the normalized text output.

The system has no rule for "chickens" and thus does not pass the word on to the processed buffer 124. Similarly, the text normalizer 38 has no rule for the word "at" and thus would pass the word "at" on to the processed buffer 124. When the text normalizer 38, however, encounters "twenty," it has a rule that applies (a number rule 128). Before actually using the rule, the text normalizer 38 looks at the next word "cents" and determines that there is no rule that normalizes the phrase "twenty cents.» As a result, the number rule 128 is applied to replace "twenty" with "20" Subsequently, a currency rule 130 is applied to replace "cents" with "¢." Lastly, the word "each" is not normalized and is passed in literal form to the processed buffer 124.

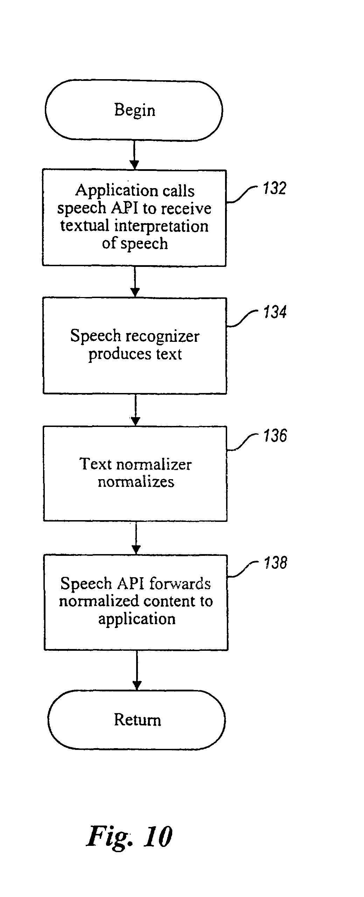

As was mentioned above, the text normalizer 38 is used within the speech API 34. Figure 10 is a flow chart that depicts the steps of how the text normalizer is used in this context. Initially, an application program 36 calls the speech API 34 to receive textual interpretation of input speech (step 132 in Figure 10). A speech recognizer processes the speech input to produce a textual output (step 134 in Figure 10). The text normalizer 38 then normalizes the text as has been described above (step 138 in Figure 10). The speech API 34 forwards the normalized content to the requesting application program 36 (step 138 in Figure 10).

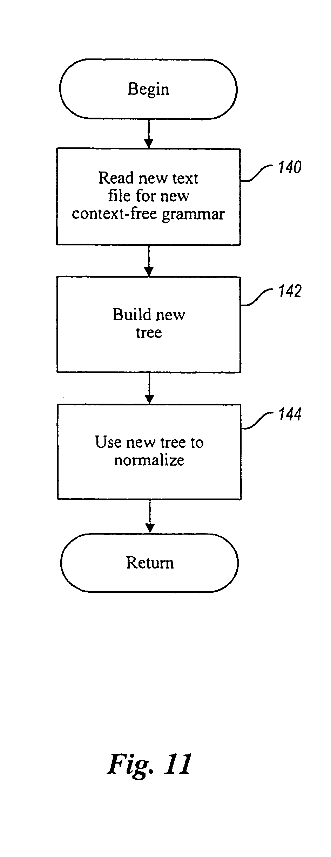

The preferred embodiment of the present invention has the benefit of being flexible and extensible. The context-free grammar is extensible in that content may be changed, added, or a complete new context-free grammar may be specified. Figure 11 is a flow chart illustrating the steps that are performed to replace the context-free grammar with a new context-free grammar. The existing context-free grammar may be replaced by providing a new text file. A new text file holds specification for the new context-free grammar. The computer system 10 then reads the new text file for the context-free grammar (step 140 in Figure 11). The information within the text file is utilized to build a new tree for the new context-free grammar (step 142 in Figure 11). The new tree is then used to normalize text (step 144 in Figure 11).

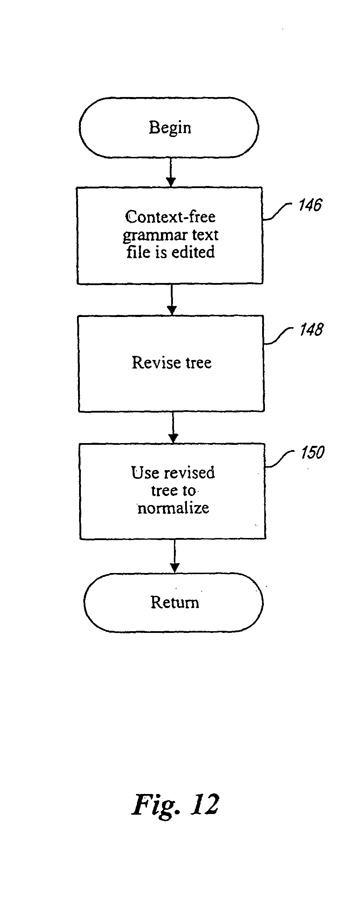

The entire text file need not be replaced each time the user wishes to change the context-free grammar. Instead, the text file may be merely edited. Figure 12 is a flow chart illustrating the steps that are performed to alter the context-free grammar in this fashion. Initially, the context-free grammar checks file as edited (step 146 in Figure 12). The tree is revised accordingly by reading the contents from the edited text file altering the tree in a matching fashion (step 148 in Figure 12). The revised tree may then be utilized to normalize text (step 150 in Figure 12).

While the present invention has been described with reference to a preferred embodiment thereof, those skilled in the art will appreciate that various changes in the form and detail may be made without departing from the intended scope of the present invention as defined in the appended claims. For example, the text normalization may generally be applied to substitute textual content with any of a number of different types of media. Moreover, the text normalizer need not be part of a speech API or part of system provided resources.

**Claims**

1.  A method in a computer system having a speech recognition engine for recognizing content in input speech, said method comprising the computer-implemented steps of:

    receiving text corresponding to speech input from the speech recognition engine;
    applying a context-free grammar to identify substitute content for the received text; and
    substituting the text with the substitute content.

2.  The method of claim 1 wherein the substitute content comprises an alphanumeric string.

3.  The method of claim 1 wherein the substitute content comprises graphical content.

4.  The method of claim 1 wherein the received text is an identifier of media content in a distributed system and the substitute content is the media content.

5.  The method of claim 4 wherein the received text is a uniform resource locator (URL).

6.  The method of claim 1 or 5, wherein the substitute content is a hypertext document.

7.  The method of claim 1 wherein the substitute content comprises audio content.

8.  The method of claim 1 wherein the context-free grammar contains at least one rule for substituting the substitute content for the received text.

9.  The method of claim 1 wherein the computer system runs an application program and wherein the substitute content is forwarded to the application program.

10. The method of claim 1 wherein the received text is a string of words and the substitute content contains a series of digits corresponding to at least some of the string of words.

11. The method of claim 1 wherein the received text is a string of words specifying an address and the substitute content includes a series of digits specifying at least a portion of the address.

12. The method of claim 1 wherein the received text is a string of words identifying an amount of currency and the substitute content includes digits and a currency symbol that specifies the amount of currency.

13. The method of claim 1 wherein the received text is a string of words that specifies a fraction and the substitute content includes digits and a mathematical operation that in conjunction specify the fraction.

14. A computer-readable medium holding computer-executable instructions for performing method as claimed in any of claims 1 to 13 in, a system having a speech recognition engine for recognizing content in input speech.

15. The method of claim 1, said method comprising the computer-implemented step of:

    providing a file that sets forth rules of a context-free grammar for normalizing text; and wherein substituting the text with the substitute content includes normalizing at least a portion, of said text to replace the portion of said text with a normalized alphanumeric string, said normalizing comprising applying a rule from the context-free grammar to replace the portion of said text being normalized with the normalized alphanumeric string.

16. The method of claim 15, further comprising the steps of replacing the file with a substitute file that sets forth rules of a different context-free grammar and using the different context-free grammar to normalize new text.

17. The method of claim 15, further comprising the step of using the file to build a tree for the context-free grammar that is used in the normalizing.

18. The method of claim 15 wherein the file is a text file.

**19.** The method of claim 15 wherein the file includes rules regarding capitalization.

**20.** The method of claim 15 wherein the file includes rules regarding spacing.

**21.** The method of claim 15 wherein the file contains specification of a switch that identifies whether or not a rule is to be used as part of the context-free grammar.

**22.** The method of claim 15, further comprising the step of altering contents of the file so as to change the context-free grammar.

**23.** The method of claim 15, further comprising the steps of receiving additional text and normalizing the additional text by applying another rule from the context-free grammar to replace the additional text with non-textual content.

**24.** The method of claim 22 or 23 wherein the non-textual content includes image data, or audio data.

**25.** A computer-readable medium holding computer-executable instructions for performing a method as claimed in any of claims 15 to 24, in a computer system having a speech recognizer for recognizing portions of speech in speech input.

**26.** A method in a computer system having an application program and a speech recognizer for recognizing portions of speech in speech input and outputting text corresponding to the recognized portions of speech, said method comprising the computer-implemented steps of:

providing an application program interface (API) that includes a text normalizer, that performs the method of claim 1 to produce normalized text having said substitute content; and

from a passing the normalized text to the application program.

**27.** The method of claim 26 wherein the API is a speech API that provides textual output corresponding to recognized speech input to the application program.

**28.** The method of claim 26 wherein the application program requests text from the API to prompt the passing of the normalized text to the application program.

**29.** A computer-readable medium holding computer-executable instructions for performing a method as claimed in any of claims 26 to 28, in a computer system having an application program and a speech recognizer for recognizing portions of speech in speech input and outputting text corresponding to the recognized portions of speech.

**30.** A computer system, comprising:

a speech recognizer for recognizing portions of speech in speech input and producing textual output corresponding to the recognized portions of speech;
a context-free grammar that contains rules for identifying substitute content for the received text and
a text normalizer that applies et least one rule from the context-free grammar to substitute the text with the substitute content.

**31.** The computer system of claim 30 wherein the text normalizer is part of an application program interface (API).

**Patentansprüche**

**1.** Verfahren in einem Computersystem mit einer Spracherkennungsmaschine zum Erkennen von Inhalt in Eingangssprache, wobei das Verfahren die folgenden computerimplementierten Schritte aufweist:

Empfangen von Text entsprechend einer Spracheingabe von der Spracherkennungsmaschine;
Anwenden einer kontextfreien Grammatik, um Ersatzinhalt für den empfangenen Text zu bestimmen; und
Ersetzen des Textes durch den Ersatzinhalt.

**2.** Verfahren nach Anspruch 1, wobei der Ersatzinhalt eine alphanumerische Folge aufweist.

**3.** Verfahren nach Anspruch 1, wobei der Ersatzinhalt graphischen Inhalt aufweist.

**4.** Verfahren nach Anspruch 1, wobei der empfangene Text eine Kennung von Medieninhalt in einem verteilten System ist und der Ersatzinhalt der Medieninhalt ist.

**5.** Verfahren nach Anspruch 4, wobei der empfangene Text eine einheitliche Quellenangabe (URL) ist.

**6.** Verfahren nach Anspruch 1 oder 5, wobei der Ersatzinhalt ein Hypertextdokument ist.

**7.** Verfahren nach Anspruch 1, wobei der Ersatzinhalt Audioinhalt aufweist.

8. Verfahren nach Anspruch 1, wobei die kontextfreie Grammatik mindestens eine Regel zum Ersetzen des empfangenen Textes durch Ersatzinhalt aufweist.

9. Verfahren nach Anspruch 1, wobei das Computersystem ein Anwendungsprogramm verarbeitet und wobei der Ersatzinhalt an das Anwendungsprogramm übergeben wird.

10. Verfahren nach Anspruch 1, wobei der empfangene Text eine Folge von Wörtern ist und der Ersatzinhalt eine Serie von Ziffern entsprechend mindestens eines Teils der Folge von Wörtern enthält.

11. Verfahren nach Anspruch 1, wobei der empfangene Text eine Folge von Wörtern enthält, die eine Adresse beschreiben, und der Ersatzinhalt eine Serie von Ziffern aufweist, die mindestens einen Abschnitt der Adresse beschreiben.

12. Verfahren nach Anspruch 1, wobei der empfangene Text eine Folge von Wörtern ist, die einen Währungsbetrag bezeichnet, und der Ersatzinhalt Ziffern und ein Währungssymbol aufweist, das den Währungsbetrag bezeichnet.

13. Verfahren nach Anspruch 1, wobei der empfangene Text eine Folge von Wörtern ist, die einen Bruch bezeichnet, und der Ersatzinhalt Ziffern und eine mathematische Operation aufweist, die gemeinsam den Bruch bezeichnen.

14. Computerlesbares Medium, das computerausführbare Anweisungen zum Durchführen des Verfahrens nach einem der Ansprüche 1 bis 13 in einem System mit einer Spracherkennungsmaschine zum Erkennen von Inhalt in Eingangssprache enthält.

15. Verfahren nach Anspruch 1, wobei das Verfahren den folgenden computerimplementierten Schritt aufweist:

   Bereitstellen einer Datei, die Regeln einer kontextfreien Grammatik zum Normalisieren von Text angibt;
   und wobei das Ersetzen des Texts durch den Ersatzinhalt das Normalisieren mindestens eines Abschnitts des Textes umfaßt, um den Abschnitt des Textes durch eine normalisierte alphanumerische Folge zu ersetzen, wobei die Normalisierung den folgenden Schritt aufweist: Anwenden einer Regel aus der kontextfreien Grammatik, um den Abschnitt des zu normalisierenden Textes durch die normalisierte alphanumerische Folge zu ersetzen.

16. Verfahren nach Anspruch 15, ferner mit den folgenden Schritten: Ersetzen der Datei durch eine Ersatzdatei, die Regeln einer anderen kontextfreien Grammatik angibt, und Verwenden der anderen kontextfreien Grammatik, um neuen Text zu normalisieren.

17. Verfahren nach Anspruch 15, ferner mit dem folgenden Schritt: Anwenden der Datei, um einen Baum für die kontextfreie Grammatik zu bauen, der bei der Normalisierung verwendet wird.

18. Verfahren nach Anspruch 15, wobei die Datei eine Textdatei ist.

19. Verfahren nach Anspruch 15, wobei die Datei Regeln in bezug auf die Großschreibung aufweist.

20. Verfahren nach Anspruch 15, wobei die Datei Regeln in bezug auf Leerzeichen aufweist.

21. Verfahren nach Anspruch 15, wobei die Datei eine Beschreibung eines Schalters enthält, der bestimmt, ob eine Regel als Teil der kontextfreien Grammatik angewendet werden soll oder nicht.

22. Verfahren nach Anspruch 15, ferner mit dem folgenden Schritt: Ändern des Inhalts der Datei, um die kontextfreie Grammatik zu ändern.

23. Verfahren nach Anspruch 15, ferner mit den folgenden Schritten: Empfangen von zusätzlichem Text und Normalisieren des zusätzlichen Textes durch Anwenden einer weiteren Regel aus der kontextfreien Grammatik, um den zusätzlichen Text durch Nichttextinhalt zu ersetzen.

24. Verfahren nach Anspruch 22 oder 23, wobei der Nichttextinhalt Bilddaten oder Audiodaten aufweist.

25. Computerlesbares Medium, das computerausführbare Anweisungen zum Durchführen eines Verfahrens nach einem der Ansprüche 15 bis 24 in einem Computersystem mit einer Spracherkennungsvorrichtung zum Erkennen von Sprachabschnitten in Spracheingabe enthält.

26. Verfahren in einem Computersystem mit einem Anwendungsprogramm und einer Spracherkennungsvorrichtung zum Erkennen von Sprachabschnitten in Spracheingabe und Ausgeben von Text entsprechend den erkannten Sprachabschnitten, wobei das Verfahren die folgenden computerimplementierten Schritte aufweist:

   Bereitstellen einer Anwendungsprogrammschnittstelle (API), die einen Textnormalisierer aufweist, der das Verfahren nach Anspruch 1 durchführt, um normalisierten Text mit dem Er-

9

satzinhalt zu erzeugen; und
Weitergeben des normalisierten Textes an das Anwendungsprogramm.

27. Verfahren nach Anspruch 26, wobei die API eine Sprach-API ist, die Textausgabe entsprechend der erkannten Spracheingabe in das Anwendungsprogramm bereitstellt.

28. Verfahren nach Anspruch 26, wobei das Anwendungsprogramm Text von der API anfordert, um das Weitergeben des normalisierten Textes an das Anwendungsprogramm zu veranlassen.

29. Computerlesbares Medium, das computerausführbare Anweisungen zum Durchführen eines Verfahrens nach einem der Ansprüche 26 bis 28 in einem Computersystem mit einem Anwendungsprogramm und einer Spracherkennungsvorrichtung zum Erkennen von Sprachabschnitten in Spracheingabe und zum Ausgeben von Text entsprechend den erkannten Sprachabschnitten enthält.

30. Computersystem mit:

einer Spracherkennungsvorrichtung zum Erkennen von Sprachabschnitten in Spracheingabe und zum Erzeugen von Textausgabe entsprechend den erkannten Sprachabschnitten;
einer kontextfreien Grammatik, die Regeln zum Bestimmen von Ersatzinhalt für den empfangenen Text enthält; und
einem Textnormalisierer, der mindestens eine Regel aus der kontextfreien Grammatik anwendet, um den Text durch den Ersatztext zu ersetzen.

31. Computersystem nach Anspruch 30, wobei der Textnormalisierer Teil einer Anwendungsprogrammschnittstelle (API) ist.

**Revendications**

1. Procédé dans un système informatique ayant un moteur de reconnaissance vocale pour reconnaître le contenu de paroles d'entrée, ledit procédé comprenant les étapes implémentées par ordinateur consistant à :

recevoir du texte correspond à l'entrée de parole à partir du moteur de reconnaissance vocale ;
appliquer une grammaire indépendante du contexte pour identifier le contenu de remplacement pour le texte reçu ; et
substituer le texte par le contenu de remplacement.

2. Procédé selon la revendication 1, dans lequel le contenu de remplacement comprend une chaîne alphanumérique.

3. Procédé selon la revendication 1, dans lequel le contenu de remplacement comprend un contenu graphique.

4. Procédé selon la revendication 1, dans lequel le texte reçu est un identificateur de contenu média dans un système distribué et dans lequel le contenu de remplacement est le contenu média.

5. Procédé selon la revendication 4, dans lequel le texte reçu est une adresse Web (URL).

6. Procédé selon la revendication 1 ou 5, dans lequel le contenu de remplacement est un document hypertexte.

7. Procédé selon la revendication 1, dans lequel le contenu de remplacement comprend un contenu audio.

8. Procédé selon la revendication 1, dans lequel la grammaire indépendante du contexte contient au moins une règle pour substituer le contenu de remplacement pour le texte reçu.

9. Procédé selon la revendication 1, dans lequel le système informatique exécute un programme d'application et dans lequel le contenu de remplacement est réacheminé vers le programme d'application.

10. Procédé selon la revendication 1, dans lequel le texte reçu est une chaîne de mots et dans lequel le contenu de remplacement contient une série de chiffres correspondant à au moins certains éléments de la chaîne de mots.

11. Procédé selon la revendication 1, dans lequel le texte reçu est une chaîne de mots spécifiant une adresse et dans lequel le contenu de remplacement comprend une série de chiffres spécifiant au moins une partie de l'adresse.

12. Procédé selon la revendication 1, dans lequel le texte reçu est une chaîne de mots identifiant une quantité de monnaie et dans lequel le contenu de remplacement comprend des chiffres et un symbole monétaire qui spécifie la quantité de monnaie.

13. Procédé selon la revendication 1, dans lequel le texte reçu est une chaîne de mots qui spécifie une fraction et dans lequel le contenu de remplacement comprend les chiffres et une opération mathématique qui, pris conjointement spécifient la fraction.

**14.** Support lisible par ordinateur contenant des instructions exécutables par ordinateur pour exécuter un procédé selon l'une quelconque des revendications 1 à 13, dans un système ayant un moteur de reconnaissance vocale pour reconnaître le contenu de paroles d'entrée.

**15.** Procédé selon la revendication 1, ledit procédé comprend les étapes implémentées par ordinateur consistant à :

> fournir un fichier qui définit les règles d'une grammaire indépendante du contexte pour normaliser le texte ;
> et dans lequel substituer le texte par le contenu de remplacement comprend
> normaliser au moins une partie dudit texte pour remplacer la partie dudit texte par une chaîne alphanumérique normalisée, ladite normalisation comprenant l'application d'une règle à partir de la grammaire indépendante du contexte pour remplacer la partie dudit texte celui-ci étant normalisée par la chaîne alphanumérique normalisée.

**16.** Procédé selon la revendication 15, comprenant en outre, les étapes consistant à remplacer le fichier par un fichier de remplacement qui définit les règles d'une grammaire indépendante du contexte différente et à utiliser la grammaire indépendante du contexte différente pour normaliser le nouveau texte.

**17.** Procédé selon la revendication 15, comprenant en outre, l'étape consistant à utiliser le fichier pour créer un arbre pour la grammaire indépendante du contexte qui est utilisée dans la normalisation.

**18.** Procédé selon la revendication 15, dans lequel le fichier est un fichier texte.

**19.** Procédé selon la revendication 15, dans lequel le fichier comprend des règles concernant l'emploi des majuscules.

**20.** Procédé selon la revendication 15, dans lequel le fichier comprend des règles concernant l'espacement.

**21.** Procédé selon la revendication 15, dans lequel le fichier contient la spécification d'un commutateur qui identifie si une règle doit être utilisée, ou non, comme partie de la grammaire indépendante du contexte.

**22.** Procédé selon la revendication 15, comprenant en outre, l'étape consistant à modifier le contenu du fichier de manière à changer la grammaire indépendante du contexte.

**23.** Procédé selon la revendication 15, comprenant, en outre, les étapes consistant à recevoir du texte supplémentaire et à normaliser le texte supplémentaire en appliquant une autre règle à partir de la grammaire indépendante du contexte pour remplacer le texte supplémentaire par du contenu non textuel.

**24.** Procédé selon la revendication 22 ou 23, dans lequel le contenu non textuel comprend des données image ou des données audio.

**25.** Support lisible par ordinateur contenant des instructions exécutables par ordinateur pour exécuter un procédé selon l'une quelconque des revendications 15 à 24, dans un système informatique ayant un système de reconnaissance vocale pour reconnaître des parties de parole dans une entrée de parole.

**26.** Procédé dans un système informatique ayant un programme d'application et un système de reconnaissance vocale pour reconnaître des parties de parole dans une entrée de parole et sortir du texte correspond aux parties reconnues de la parole, ledit procédé comprenant les étapes implémentées par ordinateur consistant à :

> fournir une interface de programme d'application (API) qui comprend un normaliseur de texte qui effectue le procédé selon la revendication 1 pour produire du texte normalisé ayant ledit contenu de remplacement ; et
> transmettre le texte normalisé au programme d'application.

**27.** Procédé selon la revendication 26, dans lequel l'API est un API vocal qui fournit une sortie textuelle correspond aux paroles reconnues entrées dans le programme d'application.

**28.** Procédé selon la revendication 26, dans lequel le programme d'application demande le texte à partir de l'API pour guider la transmission du texte normalisé au programme d'application.

**29.** Support lisible par ordinateur comprenant des instructions exécutables par ordinateur pour exécuter un procédé selon l'une quelconque des revendications 26 à 28, dans un système informatique ayant un programme d'application et un système de reconnaissance vocal pour reconnaître des parties de parole dans une entrée de parole et sortir du texte correspond des parties reconnues de parole.

**30.** Système informatique comprenant :

> un système de reconnaissance vocale pour reconnaître des parties de parole dans une entrée de parole et pour produire une sortie textuelle correspond aux parties reconnues de parole ;

une grammaire indépendante du contexte qui contient des règles pour identifier le contenu de remplacement pour le texte reçu ; et un normaliseur de texte qui applique au moins une règle à partir de la grammaire indépendante du contexte pour substituer le texte par le contenu de remplacement.

**31.** Système informatique selon la revendication 30, dans lequel le normaliseur de texte fait partie d'une interface de programme d'application (API).

**Fig. 1**

| CPU (12) | Keyboard (14) | Mouse (16) | Microphone (18) | Video Display (20) |

10

| Primary Memory (28) | Secondary Memory (30) | Loudspeakers | Network Adapter | Modem |
| Speech Recognizer (32) | | | | |
| Speech API (34) | | | | |
| Text Normalizer (38) | Context free grammar (40) | | | |
| Applications (36) | | (22) | (24) | (26) |

EP 1 016 074 B1

Network

*44*

Client
Computer

*10*

Server

*46*

Networking
Support

*42*

Media
Content

*48*

**Fig. 2**

EP 1 016 074 B1

*Fig. 3A*

EP 1 016 074 B1

```
  32                         38                              36

┌──────────────┐            ┌──────────────┐                ┌──────────────┐
│              │            │              │                │              │
│              │  Text 50   │              │  Normalized    │              │
│   Speech     │ ─────────▶ │    Text      │  Text 54       │ Application  │
│  Recognizer  │            │  Normalizer  │ ─────────────▶ │              │
│              │            │              │                │              │
│              │            │              │                │              │
└──────────────┘            └──────────────┘                └──────────────┘
```

*Fig. 3B*

EP 1 016 074 B1

| | | | | | |
|---|---|---|---|---|---|
| 32 | Speech Recognizer | Text *50* → | 38 | Text Normalizer | Image Data *56* → | 36 | Application |

*Fig. 3C*

*Fig. 3D*

Speech Recognizer — 32

Text 50

Text Normalizer — 38

Audio Content 58

Application — 36

Fig. 3E

Speech Recognizer — 32

Text 50

Text Normalizer — 38

Hypertext Document 60

Application — 36

Text File 62

Spacing

*64*

Capitalization

*66*

Other Rules

*68*

*Fig. 4*

Categories of Other Rules

| | |
|---|---|
| Glossary | 70 |
| Numbers | 72 |
| Dates | 74 |
| Currencies | 76 |
| Times | 78 |
| Fractions | 80 |
| Acronyms | 82 |
| Addresses | 84 |
| Phone Numbers | 86 |
| City, State, Zip Code | 88 |
| Measurement Units | 90 |

*Fig. 5*

**Fig. 6**

*Fig. 7*

*Fig. 8*

EP 1 016 074 B1

text buffer
*122*

five          chickens          at          twenty          cents          each

Digit
rule        — *126*

*128* —      Number
rule

Currency
rule        — *130*

processed buffer
*124*

5          chickens          at          20 ¢          each

*Fig. 9*

*Fig. 10*

Begin

Read new text
file for new
context-free grammar — 140

Build new
tree — 142

Use new tree to
normalize — 144

Return

*Fig. 11*

Begin

Context-free
grammar text
file is edited
— 146

Revise tree
— 148

Use revised
tree to
normalize
— 150

Return

*Fig. 12*